# EUROPEAN PATENT SPECIFICATION

(11) **EP 0 838 626 B1**
(45) Date of publication and mention of the grant of the patent: **16.07.2003**
(21) Application number: 97308202.7
(22) Date of filing: 16.10.1997
(51) Int. Cl.: F16L 55/033, F16L 3/10, F16L 3/12, F16L 3/223

(54) **Holder for tubular components**
Halter für rohrförmige Komponenten
Support pour composants tubulaires

(30) Priority: 23.10.1996 DE 29618513 U
(43) Date of publication of application: 29.04.1998
(73) Proprietor: Newfrey LLC, Newark, Delaware 19711 (US)
(72) Inventor: Saltenberger, Reimar, 35641 Niederwetz (DE); Schaty, Harald, 33582 Wetzlar-Dutenhofen (DE)
(74) Representative: Haar, Lucas H., Dipl.-Ing.

(56) References cited:
- EP-A- 0 159 958
- DE-A- 3 907 067
- DE-U- 29 515 357
- FR-A- 2 640 349
- FR-A- 2 643 119
- US-A- 3 606 218

## Description

The present invention relates to a holder for tubular components with a receiving member with a vibration-damping structure which is formed on a wall of the receiving member and at least partially limits a socket, wherein the structure is substantially in the form of a honeycomb and has mutually spaced, substantially radially extending transverse walls which are arranged round a circumference, two adjacent transverse walls being connected by a circumferentially extending wall.

A holder of this kind is disclosed in US-A-3 606 218 and consists of two metal support strap portions which form a sleeve for the reception of a pipe. A plurality of strips of resilient material are cemented to the inner surface of the strap portions. The strap portions and the strips are coated with a layer of elastomeric material, which may be applied by dripping, spraying or the like and then curing to form a resilient coating.

A design of holder for tubular components is known from DE 37 08 864 C2. Such a holder is used for fastening a tubular component on a carrier. The tubular component can be, for example, a fuel or brake line, which is laid in a vehicle. A problem with such holders is that these vibrations, in particular noises, are transmitted from the tubular component to a carrier on which the holder is fixed, or vice versa. To avoid the transmission of vibrations, it is proposed in DE 37 08 864 C2 that the holder have a inlay of a material which is more flexible than the plastics material of the holder. The inlay is formed in the region of a socket into which the tubular component is introduced. The inlay is connected via at least one connecting element by the two-component injection process to a surface of a receiving member of the holder. The inlay is in direct contact with the tubular component. DE 37 08 864 C2 also describes a holder in which the entire socket is formed by a material which is more flexible than the plastics material of the receiving member. A cover is required with this design of holder as the holding force applied to a tubular component by the inlay is too low to ensure that the tubular component is held by the holder. In particular, there is a risk that the tubular component will jump from the holder socket if the holder and/or the tubular component do not adopt their predetermined position owing to inaccuracies in production.

EP 0 483 636 B1 describes a further design of a holder. The holder comprises at least one bearing region arranged next to a holding region for receiving at least one tubular component. The holder is made up of three parts. It has a first part of a rigid material forming the bearing region. A second part of flexible damping material is inserted in the first part. A third part which is inserted via a continuous orifice in the second part is provided for fixing the holder on a structure. The third part consists of a rigid material. The second part, which consists of flexible damping material, serves to dampen vibrations so the vibrations are not transmitted to the structure. This second part simultaneously forms a mechanical connection between the first part forming the bearing region and the third part comprising the holding region.

A holder for tubular components comprising a receiving member is known from DE 40 39 822. A structure which at least partially limits a socket for the tubular component can be introduced into the receiving member. The receiving member is formed from a rigid material. The structure is of a resilient material. It comprises two half shells having, in its centre, half-ring-shaped shells which are adapted to a tubular component in their centre and are connected to the half shells via outwardly extending spring legs kinked in the form of a V. The knee tips of the spring legs kinked in the form of a V are directed to alternate sides - as viewed in the axial direction.

It is an object of the present invention to provide a mechanically stable holder for tubular components which allows decoupling of a tubular component from a structure, in terms of vibration, and which can be produced more easily.

The present invention provides a holder for tubular components according to claim 1.

The structure and the receiving member of the holder preferably consist of the same material which simplifies production relative to holders produced by a two-component injection process. The structure serves not only to dampen vibrations but also to absorb forces of a component on the holder. There is spot or linear contact between the tubular component and the supporting elements. The supporting elements are preferably arranged such that their free ends lie over an imaginary contour corresponding to an external contour of a tubular component. The term tubular component should be interpreted in the broadest sense. It can have a substantially circular, elliptical or polygonal cross section. As there is merely spot or linear contact between the supporting elements and a tubular component which can be introduced into the holder, vibrations of the component are not transmitted or are only transmitted to a very limited extent onto the receiving member. The honeycomb structure, of which the walls are preferably arranged relative to one another such that no continuous rigid wall is formed, as viewed in the radial direction, also contributes to the vibration-damping property of the holder. The forces transmitted from a component via a supporting element are transmitted substantially symmetrically to the structure so the structure and therefore the holder are desirably loaded.

The supporting elements extend at least over a portion of the length of the transverse walls as viewed in the axial direction. Several supporting elements can be formed in succession and with mutual spacing as viewed in the axial direction on a transverse wall. However, to simplify production of the holder, a design of the supporting elements in which the supporting elements extend substantially over the entire length of the axial dimension of the transverse walls is preferred for simplifying production of the holder.

A particularly advantageous design of the holder is achieved if the walls and/or transverse walls of the structure are curved in design.

A design in which the wall is concavely curved in the section between a transverse wall and a supporting element is preferred.

The holder can also be used with tubular components having a relatively large cross section. For this purpose, it is proposed that the receiving member have at least one articulated shell comprising a structure. The shell is preferably articulated by means of a film hinge. For fixing the holder on the tubular component, it is proposed that the shell be lockable to the receiving member.

The holder is preferably formed overall in one piece. It preferably consists of a plastics material. Further advantages and details of the holder according to the invention will be described with reference to the accompanying drawings, in which:
Figure 1 is a front view of a first embodiment of a holder;
Figure 2 is a plan view of the holder according to Figure 1;
Figure 3 is a front view of a second embodiment of a holder; and
Figure 4 is a plan view of the holder according to Figure 3.

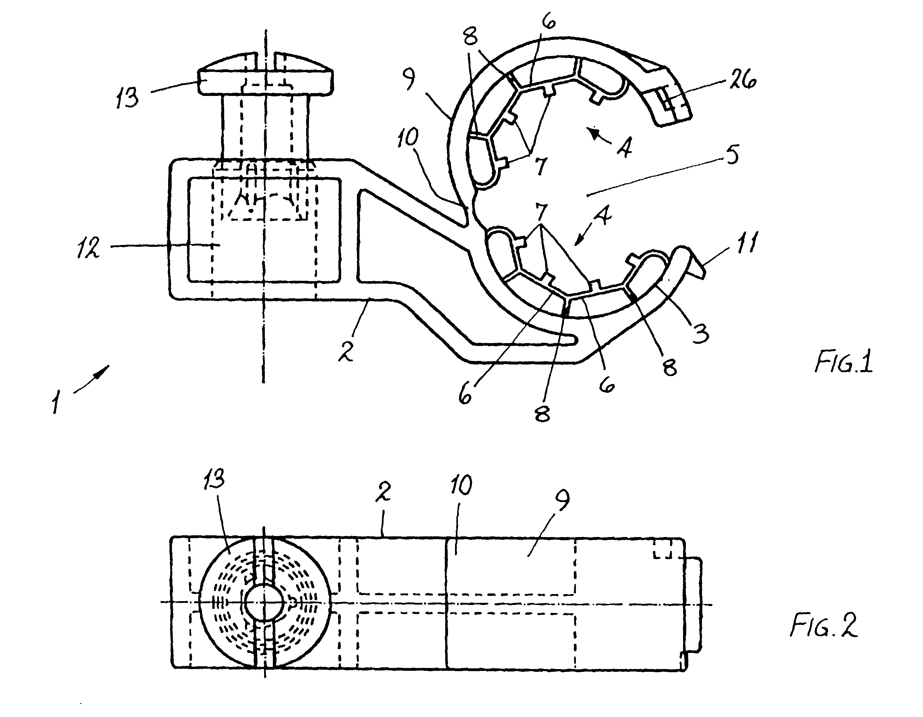

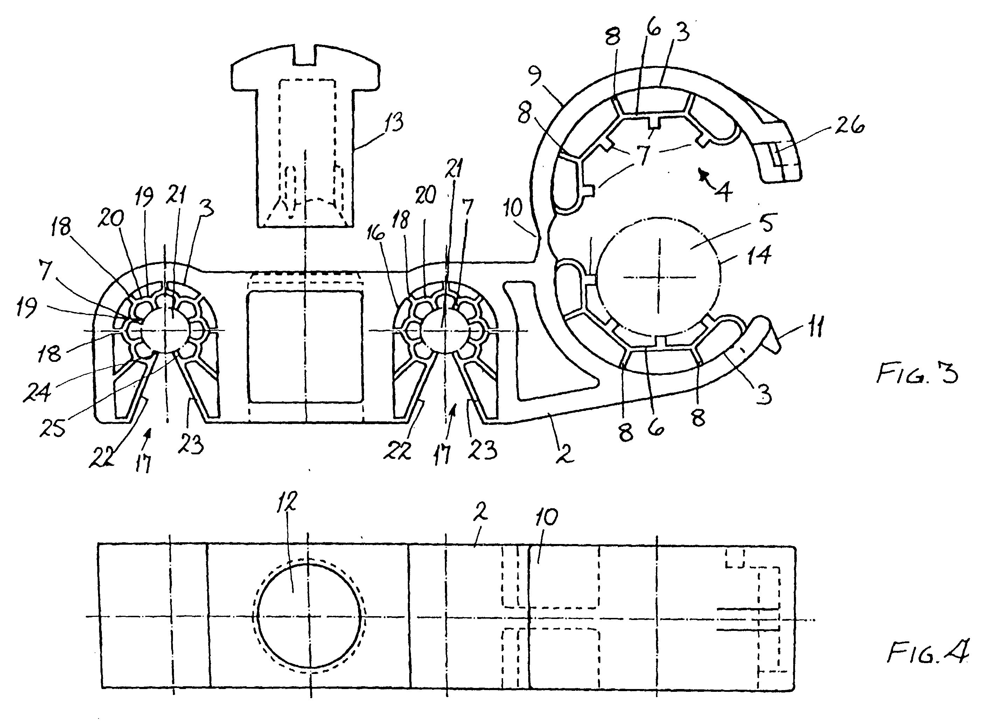

Figure 1 shows a first embodiment of a holder. The holder 1 serves to receive tubular components. It has a receiving member 2. A vibration-damping structure 4 is formed on a wall 3 of the receiving member 2. The vibration-damping structure 4 limits a socket 5 which is suitable for receiving a tubular component. The structure 4 is substantially in the form of a honeycomb. The structure 4 has peripherally arranged walls 6 having supporting elements 7 penetrating into the socket 5. The structure 4 has mutually spaced, substantially radially extending transverse walls 8. Between two adjacent transverse walls 8 there is a respective wall 6. The transverse walls 8 and the walls 6 are connected to one another. As shown in the illustration in figure 1, each supporting element 7 is formed substantially centrally between two adjacent transverse walls 8. The supporting elements 7 are web-shaped in design and extend over the entire axial length of the transverse walls 8. The receiving member 2 has a shell 9 with the structure 4. The shell 9 is articulated on the receiving member 2 by means of a film hinge 10. A catch 11 is provided for locking the shell 9 to the receiving member 2. The catch 11 can be brought into engagement with a recess formed on the shell 9.

To fix the holder 1 on a structure which is not illustrated, the holder 1 has an orifice 12 into which a fastening element 3 can be introduced. The fastening element 13 can be connected, for example, to a stud which is welded on a structure, preferably a vehicle body.

Figure 3 shows a second embodiment of a holder 1. The holder 1 has three holding regions for holding a tubular component. The outer right-hand holding region corresponds to the holder shown in figure 1 in the embodiment. As shown in the illustration in figure 3, the supporting elements 7 lie round the circumference of a common circle 14.

The other holding regions of the holder according to figure 3 each have a wall 15 or 16 on which a respective structure 17 is formed. The structure 17 comprises substantially radially extending transverse walls 18. The transverse walls 18 are connected to one another via walls 19. Each wall 19 has a supporting element 7. The walls 19 are curved in design. In the portion 20 of the wall 19 located between a transverse wall 19 and a supporting element 7, the wall is substantially concavely curved.

During the introduction of a tubular component into the socket 21, the substantially radially extending transverse walls 22, 23 which form a funnel are pressed apart. Owing to the honeycomb configuration of the structure, the structure is also peripherally elastic. The supporting elements 24, 25 forming the continuations of the transverse walls 22, 23 also act as blocking members, preventing a tubular component escaping from the socket 21.

## Claims

1. Holder for tubular components with a receiving member (2) with a vibration-damping structure (4, 17) which is formed on a wall (3, 16) of the receiving member (2) and at least partially limits a socket (5), wherein the structure (4, 17) is substantially in the form of a honeycomb and has mutually spaced, substantially radially extending transverse walls (8, 18) which are arranged round a circumference (14), two adjacent transverse walls (8, 18) being connected by a circumferentially extending wall (6, 19), **characterised in that** a supporting element (7) penetrating into the socket (5) is formed on the circumferentially extending wall (6, 19) substantially centrally between two adjacent transverse walls (8, 18).

2. Holder according to claim 1, **characterised in that** the supporting element (7) extends at least over a portion of the length in the axial direction of the transverse walls (8).

3. Holder according to one of claims 1 or 2, **characterised in that** the circumferentially extending wall (6, 19) and/or the transverse walls (8, 18) are curved in design.

4. Holder according to claim 3, **characterised in that** the wall (19) is concavely curved in the portion (20) between a transverse wall (18) and a supporting element (7).

5. Holder according to one of claims 1 to 4, **characterised in that** the receiving member (2) has at least an articulated shell (9) having a structure (4).

6. Holder according to claim 5, **characterised in that** the shell (9) is articulated by means of a film hinge (10).

7. Holder according to claim 5 or 6, **characterised in that** the shell (9) can be locked to the receiving member (2).

8. Holder according to one of claims 1 to 7, **characterised**
**in that** the holder (1) is formed in one piece.

9. Holder according to claim 8, **characterised in that** the 15 holder (1) consists of a plastics material.

## Patentansprüche

1. Halter für rohrförmige Bauteile mit einem Aufnahmekörper (2) mit einer an einer Wandung (3, 16) des Aufnahmekörpers (2) ausgebildeten, schwingungsdämpfenden Struktur (4, 17), die eine Aufnahme (5) wenigstens teilweise begrenzt, wobei die Struktur (4, 17) im wesentlichen wabenförmig ausgebildet ist und voneinander beabstandete, sich im wesentlichen radial erstreckende Querwände (8, 18) aufweist, die auf einem Umfang (14) angeordnet sind, wobei zwei benachbarte Querwände (8, 18) durch eine sich in Umfangsrichtung erstreckende Wand (6, 19) verbunden sind, **dadurch gekennzeichnet, dass** auf der sich in Umfangsrichtung erstreckenden Wand (6, 19) im wesentlichen mittig zwischen zwei benachbarten Querwänden (8, 18) ein in die Aufnahme (5) hineinragendes Stützelement (7) ausgebildet ist.

2. Halter nach Anspruch 1, **dadurch gekennzeichnet, dass** das Stützelement sich wenigstens über einen Teil der Länge in axialer Richtung der Querwände (8) erstreckt.

3. Halter nach einem der Ansprüche 1 oder 2, **dadurch gekennzeichnet, dass** die sich in Umfangsrichtung erstreckende Wand (6, 19) und/oder die Querwände (8, 18) gekrümmt ausgebildet sind.

4. Halter nach Anspruch 3, **dadurch gekennzeichnet, dass** die Wand (19) im Abschnitt (20) zwischen einer Querwand (18) und einem Stützelement (7) konkav gekrümmt ist.

5. Halter nach einem der Ansprüche 1 bis 4, **dadurch gekennzeichnet, dass** der Aufnahmekörper (2) wenigstens eine eine Struktur (4) aufweisende, angelenkte Schale (9) hat.

6. Halter nach Anspruch 5, **dadurch gekennzeichnet, dass** die Schale (9) mittels eines Filmscharniers (10) angelenkt ist.

7. Halter nach Anspruch 5 oder 6, **dadurch gekennzeichnet, dass** die Schale (9) mit dem Aufnahmekörper (2) verriegelbar ist.

8. Halter nach einem der Ansprüche 1 bis 7, **dadurch gekennzeichnet, dass** der Halter (1) einstückig ausgebildet ist.

9. Halter nach Anspruch 8, **dadurch gekennzeichnet, dass** der Halter (1) aus einem Kunststoff besteht.

## Revendications

1. Support pour composants tubulaires avec un élément de réception (2) pourvu d'une structure amortissant les vibrations (4, 17), qui est formée sur une paroi (3, 16) de l'élément de réception (2) et limite au moins partiellement une douille (5), dans lequel la structure (4, 17) a sensiblement la forme d'un nid d'abeilles et est dotée de parois transversales mutuellement espacées qui s'étendent de manière sensiblement radiale (8, 18), et qui sont disposées autour d'une circonférence (14), deux parois transversales adjacentes (8, 18) étant raccordées par une paroi (6, 19) qui s'étend de manière circonférentielle, **caractérisé en ce qu'**un élément de support (7) qui pénètre dans la douille (5) est formé sur la paroi (6, 19) qui s'étend de manière circonférentielle de manière sensiblement centrale entre les deux parois transversales adjacentes (8, 18).

2. Support selon la revendication 1, **caractérisé en ce que** l'élément de support (7) s'étend au moins sur une partie de la longueur dans la direction axiale des parois transversales (8).

3. Support selon l'une des revendications 1 ou 2, **caractérisé en ce que** la paroi qui s'étend de manière circonférentielle (6, 19) et/ou les parois transversales (8, 18) présentent une conception courbe.

4. Support selon la revendication 3, **caractérisé en ce que** la paroi (19) est courbe de manière concave dans la partie (20) entre une paroi transversale (18) et un élément de support (7).

5. Support selon l'une des revendications 1 à 4, **caractérisé en ce que** l'élément de réception (2) possède au moins une coquille articulée (9) dotée d'une structure (4).

6. Support selon la revendication 5, **caractérisé en ce que** la coquille (9) est articulée au moyen d'un film formant charnière (10).

7. Support selon la revendication 5 ou 6, **caractérisé en ce que** la coquille (9) peut être bloquée sur l'élément de réception (2).

8. Support selon l'une des revendications 1 à 7, **caractérisé en ce que** le support (1) est formé en une pièce.

9. Support selon la revendication 8, **caractérisé en ce que** le support (1) se compose de matière plastique.
